# EUROPÄISCHE PATENTANMELDUNG

(11) **EP 0 841 802 A2**
(43) Veröffentlichungstag der Anmeldung: **13.05.1998**
(21) Anmeldenummer: 97113929.0
(22) Anmeldetag: 13.08.1997
(51) Int. Cl.: H04M 17/02, H04M 15/28

(54) **Verfahren und Schaltungsanordnung zur Tarifimpulssteuerung bei Münztelefonen**

(30) Priorität: 09.11.1996 DE 19646311
(71) Anmelder: Deutsche Telekom AG, 53113 Bonn (DE)
(72) Erfinder: Splittstösser, Karl-Heinz, Dipl.-Ing., 64297 Darmstadt (DE)

(57) **Zusammenfassung**

Es wird ein Verfahren und eine Schaltungsanordnung zum Verhindern des Auftretens von nicht durch Kassieren gedeckten Tarifimpulsen bei Münztelefonen beschrieben, die ohne Programmierung direkt am Endgerät bzw. über das bekannte Softwaredownloading auskommen. In einem Endgerät eines Telefonnetzes ist eine Eingabeschaltung (2) mit Tastatur und gegebenenfalls Tastaturspeicher und eine Echtzeituhr (3) sowie ein Speicher (1) vorhanden, der mit einer Tabelle aller wichtigen Telefonnummern, Zeiten und Zeittakte und ähnlichem versehen ist. Dieser Speicher (1) ist als Lese-/Schreibspeicher oder EEPROM ausgeführt. Er ist seinerseits mit einer Vergleichsschaltung (4) über Leitungen (12) zum Vergleich der Zeiten mit den Einträgen in der Tabelle und zur Aktualisierung der Tabelle verbunden. Die Vergleichsschaltung (4) ist ihrerseits über eine Leitung (10) mit einer Zeitmeßschaltung (5) verbunden, die die Zeitmessung zwischen erster und zweiter Tarifeinheit ausführt. Diese Zeitmeßschaltung (5) ist mit einer Leitung (13) zur Sprechschaltung des nicht dargestellten Endgerätes verbunden. Außerdem ist diese Schaltung (5) mit einer Trennschaltung (6) über eine Leitung (11) verbunden, die ihrerseits mit dem Speicher (1) über eine Leitung (9) und über eine Leitung (14) mit dem jeweiligen Telefonnetz verbunden ist.

## Beschreibung

Die Erfindung betrifft ein Verfahren und eine Schaltungsanordnung zur Steuerung der Tarifimpulse bei Münztelefonen nach dem Oberbegriff des Patentanspruches 1 bzw. des Patentanspruches 6.

Bekannte Münztelefone steuern die Kassierung durch die vom Netzknoten des Betreibernetzes gesendeten Tarifinformationen, zum Beispiel durch 16-kHz-Impulse. Vor dem Aufbau einer Verbindung muß der Benutzer eines Münztelefons den eingestellten Minimumbetrag einwerfen, um einen Wählvorgang einleiten zu können. Dabei tritt folgendes Problem auf:

Wenn nur der Betrag für die erste Tarifeinheit eingeworfen wird, wird die Verbindung vom Münztelefon beim Eintreffen des zweiten Tarifimpulses zwangsweise getrennt, weil kein Guthaben mehr für diese Tarifeinheit vorhanden ist. Diese zweite Tarifeinheit wird dem Betreiber jedoch in Rechnung gestellt. Es steht den zwei Tarifimpulsen nur die Einnahme für eine Tarifeinheit gegenüber. Nach dem Eintreffen des zweiten Tarifimpulses ist die Zeit zwischen den Impulsen bekannt, so daß das Münztelefon rechtzeitig vor nicht gedeckten weiteren Tarifimpulsen die Verbindung trennen kann. Das hier geschilderte Problem wird bei den auf dem Markt befindlichen Münztelefonen dadurch gelöst, daß
- ein Verbindungsaufbau nur möglich ist, wenn der Benutzer mindestens den Betrag für zwei Tarifeinheiten eingeworfen hat. Bei dem Einwurf einer höherwertigen Münze und dem Aufkommen nur einer Tarifeinheit wird die Münze kassiert, der Benutzer zahlt also für eine Tarifeinheit den Gegenwert für Zwei Tarifeinheiten.
- die für die Tarifierung entscheidenden Vorwahlnummern mit den jeweils zugehörigen Zeiten zwischen den Tarifimpulsen und den jeweiligen Tarifzeiten (tageszeit- und wochentagabhängig) direkt am oder über einen Softwaredownload programmiert werden. Dies ist aufgrund der Vielzahl der Kombinationen sehr aufwendig und erfordert einen ständigen Änderungsdienst. Hinzu kommt, daß die zu programmierenden Daten nicht einheitlich, sondern standortabhängig sind. Bei Münztelefonen, die der Mieter oder Käufer programmieren muß, ist nicht sichergestellt, daß die Programmierung überhaupt bzw. rechtzeitig erfolgt.

Der Erfindung liegt deshalb die Aufgabe zugrunde, ein Verfahren und eine Schaltungsanordnung zur Steuerung der Verhinderung des Auftretens von nicht durch Kassieren gedeckten Tarifimpulsen bei Münztelefonen zu schaffen, die ohne eine komplizierte Umprogrammierung am Gerät selbst benötigen und ohne Softwaredownload automatisch angepaßt sind.

Die erfindungsgemäße Lösung des Verfahrens ist im Kennzeichen des Patentanspruchs 1 charakterisiert.

Die erfindungsgemäße Lösung für die Schaltungsanordnung ist im Kennzeichen des Patentanspruchs 6 charakerisiert.

Weitere Merkmale bzw. Ausgestaltungen des erfindungsgemäßen Verfahrens bzw. der erfindungsgemäßen Schaltungsanordnung sind der Beschreibung bzw. den Kennzeichen der Patentansprüche 2 bis 5 und für die Schaltungsanordnung den Kennzeichen der Patentansprüche 7 bis 10 zu entnehmen.

Dadurch, daß erfindungsgemäß das Münztelefon mit einem Speicher ausgerüstet ist, indem alle bzw. die wichtigsten Vorwahlnummern, Länderkennzahlen und Zugangsnummern zu speziellen Diensten und zusätzlich ein Kalender mit den Feiertagen gespeichert sind, und dadurch, daß das Münztelefon mit einer Vergleichsschaltung, einer Trennschaltung und einer Zeitmeßschaltung ausgestattet ist, die die Zeitmeßung zwischen erster und zweiter Tarifeinheit, die Trennung vor zweiter Tarifeinheit vornehmen, wenn das Guthaben nicht ausreichend ist und die zur Aktualisierung der im Speicher gespeicherten Tabelle dienen, muß das Münztelefon nun nicht mehr bei Änderung von Tarifzeiten, bei Neueinführung von Tarifzeiten, bei Änderung der Umschaltzeitpunkte zwischen den Tarifzeiten und bei neuen Vorwahlen, Landeskennzahlen bzw. Zugangsnummern über Softwaredownload oder direkt am Gerät angepaßt werden. Das Münztelefon kann eine Verbindung auch bei Ausfall der Tarifimpulse, zum Beispiel bei einer Störung bzw. einer Manipulation, grundsätzlich korrekt abrechnen.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordnete Bezugszeichen verwendet.

In der Zeichnung bedeuten:
- Fig. 1: ein Prinzipschaltbild mit den einzelnen Schaltungskomponenten zur Verhinderung des Auftretens von nicht durch Kassieren gedeckten Tarifimpulsen bei Münztelefonen und
- Fig. 2: ein Ablaufdiagramm, das die einzelnen Entscheidungs- und Auswertungsschritte des Verfahrens darstellt.

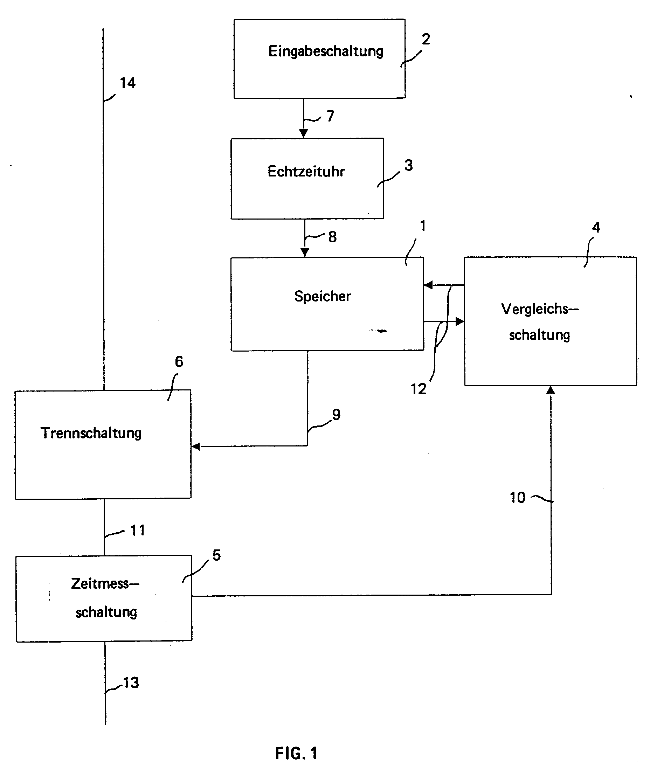

Die in Fig. 1 dargestellte Prinzipschaltung zur Verhinderung des Auftretens von nicht durch Kassieren gedeckten Tarifimpulsen bei Münztelefonen weist einen Speicher 1 auf, der eine Tabelle der Telefonnummern, der Zeiten und Zeittakte sowie einen Kalender mit Feiertagen und Zugangsnummern zu speziellen Diensten beinhaltet. Dieser Speicher 1 ist direkt im jeweiligen Endgerät, zum Beispiel einem Telefon angeordnet. Über eine Eingabeschaltung 2, die aus einer Tastatur und einem Speicher bestehen kann, werden die Telefonnummern eingegeben. Die Eingabeschaltung 2 ist über eine Leitung 7 mit einer Echtzeituhr 3, zum Beispiel einer Funkuhr verbunden. Über eine Leitung 8 ist diese mit dem Speicher 1 verbunden, über die der Speicher 1 auch die eingegebenen Telefonnummern von der Eingabeschaltung 2 übermittelt bekommt. Der Speicher 1 ist seinerseits über eine Leitung 9 mit einer Trennschaltung 6 verbunden, die zur Trennung vor der zweiten Tarifeinheit dient, wenn das Guthaben des Telefonbenutzers nicht ausreichend ist. Außerdem ist der Speicher 1 über Leitungen 12 in beiden Richtungen mit einer Vergleichsschaltung 4 verbunden, die den Vergleich der Zeiten mit den Einträgen in der Tabelle durchführt und zur Aktualisierung der Tabelle dient. Mit der Vergleichsschaltung 4 ist über eine Leitung 10 eine Zeitmeßschaltung 5 verbunden, die zur Zeitmessung zwischen der ersten und der zweiten Tarifeinheit dient. Diese Zeitmeßschaltung 5 ist ihrerseits über eine Leitung 11 mit der Trennschaltung 6 verbunden. Die Zeitmeßschaltung 5 ist über eine Leitung 13 zum Beispiel mit der nicht dargestellten Sprechschaltung des Münztelefons verbunden. Die Verbindung zum bzw. vom Telefonnetz läuft über eine Leitung 14, die mit der Trennschaltung 6 verbunden ist.

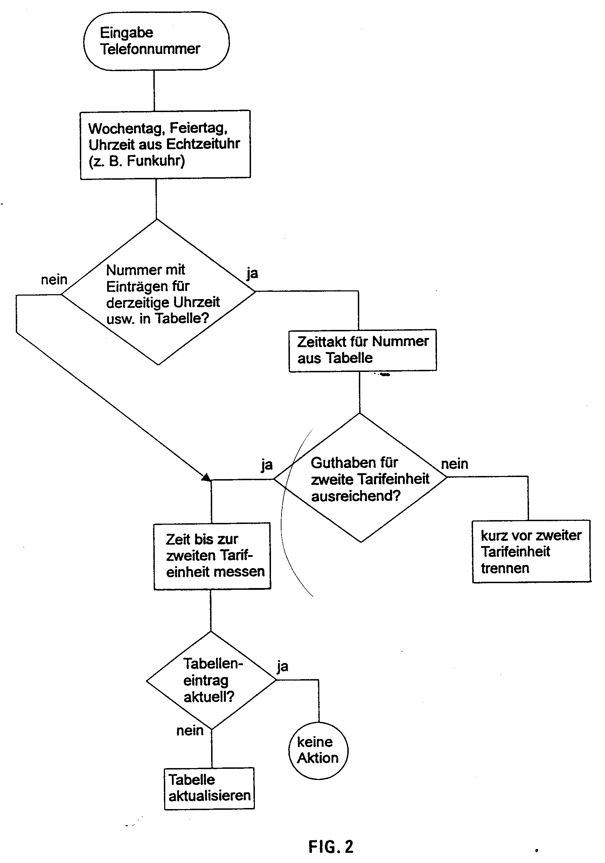

Im nachfolgenden wird anhand des Flußdiagramms der Fig. 2 die Wirkungsweise des Verfahrens und der Schaltungsanordnung nach Fig. 1 beschrieben.

Wie bereits in Verbindung mit Fig. 1 beschrieben wurde, sind alle bzw. die wichtigsten Vorwahlnummern, Länderkennzahlen und Zugangsnummern zu speziellen Diensten im Speicher 1 des jeweiligen Endgerätes gespeichert. Zusätzlich ist ein Kalender mit den Feiertagen gespeichert.

Bei der ersten Anwahl zur Eingabe einer Telefonnummer wird die Zeit zwischen dem ersten und dem zweiten Tarifimpuls gemessen und zusammen mit dem Wochentag bzw. dem Feiertag und der Uhrzeit für die zutreffende Vorwahlnummer, Länderkennzahl bzw. Zugangsnummer dauerhaft im Speicher 1 des Endgerätes gespeichert. Für die Uhrzeit genügt es im allgemeinen, nur die volle Stunde zu berücksichtigen, weil Tarifzeitenwechsel im allgemeinen in der Praxis nur zur vollen Stunde stattfinden.

Bei einer erneuten Anwahl einer beliebigen Telefonnummer mit bereits gespeicherten Daten, nämlich der Zeit zwischen dem ersten und zweiten Tarifimpuls, der Uhrzeit, des Wochentags bzw. Feiertags für die Vorwahlnummer, Länderkennzahl bzw. Zugangsnummer wird die Verbindung - wenn kein Guthaben des Anrufers für den zweiten Tarifimpuls vorhanden ist - kurz vor dem zweiten Tarifimpuls getrennt. Dem Benutzer kann optional auch vom Verbindungsbeginn an die verbleibende Gesprächszeit angezeigt werden.

Bei allen Verbindungsaufbauten zu Telefonnummern mit bereits gespeicherten Daten wie der Zeit zwischen dem ersten und zweiten Tarifimpuls, der Uhrzeit, dem Wochen- bzw. Feiertag, wird die Zeit zwischen dem ersten und dem zweiten Tarifimpuls gemessen bzw. überwacht. Bei einer Änderung gegenüber den gespeicherten Daten werden diese mit den neuen Daten überschrieben. Aus Sicherheitsgründen ist es alternativ möglich, die alten Daten erst nach mehrmaligen Auftreten der neuen Daten zu überschreiben.

Ist für eine angewählte Telefonnummer keine Vorwahl, Landeskennzahl oder Zugangsnummer im Speicher 1 gespeichert, werden die ersten Ziffern der Telfonnummer, die in der Regel für die Tarifierung entscheidend sind, zum Beispiel der ersten fünf, zusätzlich zu den anderen Daten im Speicher 1 abgespeichert.

Ist das Münztelefon in der Lage, den Verbindungsbeginn auch bei einem Ausbleiben des ersten Tarifimpulses zu erkennen, zum Beispiel durch eine Auswertung der Töne auf der Leitung, kann eine Verbindung auch bei einem Ausfall der Tarifimpulse bei Störung oder Manipulation korrekt abgerechnet werden, weil der zeitliche Abstand zwischen dem ersten und dem zweiten Tarifimpuls in der Regel auch den Abständen zwischen den weiteren Tarifimpulsen entspricht.

Anhand von Fig. 2 sollen im folgenden die einzelnen Verfahrensschritte prinzipiell beschrieben werden. Zunächst erfolgt die Eingabe der Telefonnummer und automatisch dazu zum Beispiel durch eine Funkuhr der zugehörige Wochentag, Feiertag und die Uhrzeit. Danach wird geprüft, ob die Nummer mit den Einträgen für die derzeitige Uhrzeit, dem Wochentag oder Feiertag im Speicher 1 vorhanden ist. Wenn ja, wird mit dem Zeittakt für diese Nummer aus der Tabelle das Guthaben für die zweite Tarifeinheit daraufhin geprüft, ob es ausreichend ist oder nicht. Wenn es nicht ausreichend ist wird kurz vor der zweiten Tarifeinheit eine Trennung vorgenommen.

Stimmt die eingegebene Nummer mit den Einträgen für die derzeitige Uhrzeit u.s.w. in der Tabelle nicht überein, dann wird die Zeit bis zur zweiten Tarifeinheit gemessen. Die Zeit für die zweite Tarifeinheit wird auch dann gemessen, wenn das Guthaben für die zweite Tarifeinheit ausreichend ist. Für den Fall, daß der Tabelleneintrag aktuell ist, erfolgt keine Aktion. Ist hingegen der Tabelleneintrag im Speicher 1 nicht aktuell, dann wird die Tabelle im Speicher 1 aktualisiert.

### Liste der Bezugszeichen

- 1: Speicher
- 2: Eingabeschaltung
- 3: Echtzeituhr
- 4: Vergleichsschaltung
- 5: Zeitmeßschaltung
- 6: Trennschaltung
- 7 bis 10: Leitungen
- 11: Telefonleitung
- 12: Leitungen
- 13: Leitung zur Sprechschaltung
- 14: Leitung zum/vom Telfonnetz

## Patentansprüche

1. Verfahren zum Steuern von Tarifimpulsen bei Münztelefonen, insbesondere zur Verhinderung des Auftretens von nicht durch Kassieren gedeckten Tarifimpulsen bei Münztelefonen, dadurch gekennzeichnet,
daß bei der ersten Anwahl zur Eingabe einer Telefonnummer die Zeit zwischen einem ersten und einem zweiten Tarifimpuls gemessen und automatisch gesteuert zusammen mit dem Wochentag bzw. Feiertag und der Uhrzeit für die zutreffende Vorwahlnummer, Länderkennzahl bzw. Zugangsnummer zu speziellen Diensten dauerhaft in einem Speicher (1) im Endgerät gespeichert wird,
daß bei einer erneuten Anwahl einer beliebigen Telefonnummer mit bereits gespeicherten Daten für die Vorwahlnummer, Länderkennzahl bzw. Zugangsnummer für Dienste die Verbindung kurz vor dem zweiten Tarifimpuls getrennt wird, wenn kein Guthaben des Benutzers vorhanden ist,
daß bei allen Verbindungsaufbauten zu Telefonnummern mit bereits gespeicherten Daten die Zeit zwischen dem ersten und dem zweiten Tarifimpuls überwacht wird und bei einer Änderung gegenüber den gespeicherten Daten im Speicher (1) diese überschrieben werden, und
daß für eine angewählte Telefonnummer, für die keine Vorwahl, Landeskennzahl oder Zugangsnummer zu Diensten gespeichert ist, die ersten Ziffern der Telefonnummer zusätzlich zu den anderen Daten im Speicher (1) abgespeichert werden.

2. Verfahren nach Patentanspruch 1, dadurch gekennzeichnet,
daß beim Erkennen eines Ausbleibens des ersten Tarifimpulses durch das Münztelefon eine Verbindung, auch bei einem Ausfall der Tarifimpulse, korrekt abgerechnet wird.

3. Verfahren nach einem der Patentansprüche 1 oder 2, dadurch gekennzeichnet,
daß der zeitliche Abstand zwischen dem ersten und dem zweiten Tarifimpuls in der Regel den Abständen zwischen den weiteren Tarifimpulsen entspricht.

4. Verfahren nach einem der Patentansprüche 1 bis 3, dadurch gekennzeichnet,
daß alle bzw. die wichtigsten Vorwahlnummern, Länderkennzahlen und Zugangsnummern zu speziellen Diensten in einem Speicher (1) mit einem Kalender mit den Feiertagen gespeichert werden.

5. Verfahren nach einem der Patentansprüche 1 bis 4, dadurch gekennzeichnet,
daß dem Benutzer vom Verbindungsbeginn an die verbleibende Gesprächszeit am Endgerät angezeigt wird und
daß die alten im Speicher (1) gespeicherten Daten erst nach mehrmaligen Auftreten der neuen Daten überschrieben werden.

6. Schaltungsanordnung zur Verhinderung des Auftretens von nicht durch Kassieren gedeckten Tarifimpulsen bei Münztelefonen, dadurch gekennzeichnet,
daß die Eingabeschaltung (2) über eine Leitung (7) mit einer Echtzeituhr (3) verbunden ist,
daß die Echtzeituhr (3) über eine Leitung (8) mit einem Speicher (1) verbunden ist, der Tabellen der Telefonnummern, Zeiten und Zeittakte enthält bzw. überschrieben oder eingespeichert bekommt,
daß der Speicher (1) über Leitungen (12) mit einer Vergleichsschaltung (4) verbunden ist, die den Vergleich der Zeiten mit den Einträgen in der Tabelle vornimmt und zur Aktualisierung der Tabelle dient,
daß der Speicher (1) außerdem über eine Leitung (9) mit einer Trennschaltung (6) verbunden ist, die ihrerseits über eine Leitung (14) mit dem Telefonnetz verbunden ist und über eine weitere Leitung (11) mit einer Zeitmeßschaltung (5) die zur Zeitmessung bzw. Überwachung zwischen der ersten und der zweiten Tarifeinheit dient und
daß die Zeitmeßschaltung (5) außerdem mit einer Leitung (13) zur Sprechschaltung des Endgeräts verbunden ist und über eine Leitung (10) mit der Vergleichschaltung (4).

7. Schaltungsanordnung nach Patentanspruch 6, dadurch gekennzeichnet,
daß der Speicher (1) als Lese-/Schreibspeicher, EEPROM oder ähnliches im Endgerät angeordnet ist und
daß die mit ihm über Leitung (9) verbundene Trennschaltung (6) zur Trennung vor der zweiten Tarifeinheit dient, wenn kein Guthaben vorhanden ist bzw. dieses nicht ausreichend ist.

8. Schaltungsanordnung nach einem der Patentansprüche 6 oder 7, dadurch gekennzeichnet,
daß die Zeitmeßschaltung (5) zur Überwachung der Zeit zwischen der ersten und der zweiten Tarifeinheit bei einer Änderung gegenüber den gespeicherten Daten über die mit ihr verbundene Vergleichsschaltung (4) zum Vergleichen der Zeiten mit den Einträgen in der Tabelle und zur Aktualisierung der Tabelle im Speicher (1) das Überschreiben der gespeicherten Daten mit den neuen Daten initialisiert.

9. Schaltungsanordnung nach einem der Patentansprüche 6 bis 8, dadurch gekennzeichnet,
daß die Echtzeituhr als Funkuhr ausgebildet ist.

10. Schaltungsanordnung nach einem der Patentansprüche 6 bis 9, dadurch gekennzeichnet,
daß der Speicher der Eingabeschaltung (2), die Echtzeituhr (3), der Speicher (1) mit den Tabellen der Telefonnummern, Zeiten und Zeittakte, die Vergleichsschaltung (4), die Zeitmeßschaltung (5) und die Trennschaltung (6) als integrierte Schaltungen auf einem Chip bzw. Träger integriert realisiert sind.
